# EUROPÄISCHE PATENTANMELDUNG

(11) **EP 0 585 490 A1**
(43) Veröffentlichungstag der Anmeldung: **09.03.1994**
(21) Anmeldenummer: 92118223.4
(22) Anmeldetag: 23.10.1992
(51) Int. Cl.: H04N 5/72, H04N 5/44

(54) **Übertragung und Wiedergabe von Fernsehbildern in von dem Fernsehstandard abweichendem Bildformat mit nachgeschalteter optischer Entzerrung auf der Empfängerseite**

(30) Priorität: 23.10.1991 DE 4135024
(71) Anmelder: Martin, Helmut, Dr.-Ing., D-30559 Hannover (DE)
(72) Erfinder: Martin, Helmut, Dr.-Ing., D-30559 Hannover (DE)

(57) **Zusammenfassung**

Es wird ein Verfahren beschrieben, durch das bei unterschiedlich anfallenden über Fernsehkanäle zu übertragenden Bildformaten diese elektronisch oder optisch so vorverzerrt werden, daß sie den ganzen der Übertragung zur Verfügung stehenden Übertragungskanal und danach beim Empfänger den ganzen Bildschirm in der vorverzerrten Form ausfüllen und durch Dazwischenschalten von optischen Einrichtungen zwischen Bildschirm und Betrachter, diesem ein entzerrtes, virtuelles Bild darbieten.

## Beschreibung

Bei der zunehmenden Übertragung von Breitwandfilmen der Filmindustrie über Fernsehsender treten Kompatibilitätsprobleme auf, imsbesondere durch den Umstand, daß das standardisierte Bildformat des Fernsehens seit den Anfängen, in enger Anlehnung an die damalige Aufnahmetechnik des Films nach wie vor 4:3 und noch nicht das Breitwandformat 16:9 ist. Aber auch der beschlossene schrittweise Übergang zur Breitwandtechnik und zum hochauflösenden Fernsehen HDTV mit dem Format 16:9 in den TV-Studios erfordert kompatible Schritte für einen stetigen, langsamen Übergang.

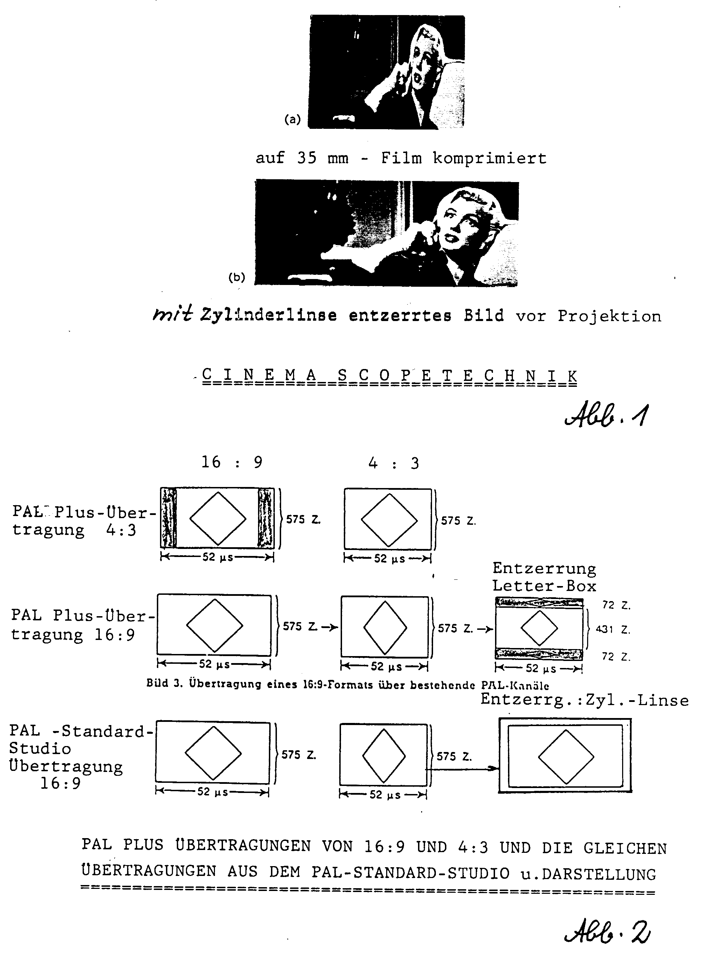

Bei Einführung der Fernsehtechnik (1936 in Berlin) waren noch keine Direktübertragungen möglich. Es mußte das sogenannte Zwischenfilmverfahren infolge noch nicht vorhandener Fernsehaufnahmeröhren mit hoher Lichtempfindlichkeit angewandt werden, weil nur dadurch eine genügend große Tiefenschärfe der Optik indirekt erreicht werden konnte. Diese enge Kopplung an den Film besteht seit etwa 1952 nicht mehr, da damals die Filmindustrie erste Breitwandtechniken einführte, wodurch in zeitlich schneller Folge anstelle des Seitenverhältnisses von 1,333 (=4:3) mit Cinemascop-55(=2:1) und mehreren anderen Breitwandverfahren Seitenverhältnisse bis zu 2,55, ebenfalls ein CinemaScope-Verfahren (s.Abb.1 u.Tab.1), eingeführt wurden, die seitdem das ursprüngliche Format 4:3 verdrängten. Lange Jahre war die Häufigkeit der Übertragung von Filmen über die Fersehsender relativ niedrig, da die Fersehanstalten über eine größere Produktion eigener Programme auf Magnetbändern verfügten. Mit der stark angestiegenen Zahl privater Fernsehsender, insbesondere durch die Fernsehsatellitentechnik, stieg durch den danach aufkommenden Mangel an eigener Produktion der Bedarf an den Filmen der Filmindustrie erheblich an. Die Filmindustrie hat es beim Übergang zu den Breitwandtechniken für sinnvoll angesehen und auch nicht für erforderlich gehalten, zu einem anderen Filmformat überzugehen. Das heißt, der 35 mm breite Celluloidstreifen ist bis heute das Wiedergabemedium der Filmindustrie geblieben. Und darüberhinaus ist sogar das Format des auf dem Filmstreifen festgehaltenen Bildes im allgemeinen nach wie vor etwa 24:18 mm , d.h. das Seitenverhältnis des auf dem Film festgehaltenen Bildes ist bei etwa 4:3 geblieben. Das wird dadurch bewirkt, daß mit sogenannten Anamorphoten - Optik die durch Dazwischenschalten von Zylinderlinsen entsteht - das Bild mindestens in einer Ausdehnungsrichtung verzerrt wird. Bei den Breitwandfilmen hat man die Bildhöhe auf dem Filmstreifen, ca. 18 mm, unverändert gelassen, das war allein schon wegen der Perforation des Films für die Wiedergabegeräte sinnvoll. Die Breite dagegen wurde durch Anamorphote bei allen Breitwandformaten auf ca.24 mm komprimiert, um sie dann durch die Optik der Wiedergabegeräte entsprechend zu entzerren. Soweit die Seite der Filmindustrie, auf die sich die Fernsehtechnik einstellen mußte. Auch heute sind noch viele Filme im alten Aufnahmeformat 4:3 vorhanden und es werden gelegentlich auch noch Filme im alten Format hergestellt. Dafür ist die Wiedergabetechnik für das Fernsehen vorhanden. Jedes Bild wird für das Zwischenzeilenverfahren für zwei Halbbilder verschachtelt zweimal abgetastet, insgesamt 575 Zeilen, jede Zeile in 52 Mikrosekunden, während für den Rücklauf des Abtaststrahls sowie für Steuertechnik und ggf. auch für den Ton zwischen den Zeilenabtastvorgängen jeweils 12 Mikrosekunden zur Verfügung stehen. Zwischen den Halbbildern beträgt die Dunkelzeit 1,6 msec. - Da nun auch die Einzelbilder von Breitwandfilmen in der Breite optisch komprimiert und in der Höhe nicht verändert worden sind, erfolgt das Abtasten für die Fernsehübertragung in der gleichen Weise wie soeben beschrieben. Strahlt nun die Fernsehanstalt das abgetastete Bild so aus, dann erscheint auf den Fernsehempfängern das komprimierte Bild (s.Abb.1). In diesem Beispiel ist das Bild sogar sehr stark komprimiert worden, und zwar nach dem CinemaScope - Verfahren von 2,55 auf 1,333, das bedeutet nahezu den Faktor 2.0! Einen Film so komprimiert dem Fernsehteilnehmer anzubieten, das wäre gewiß eine Zumutung!

Die Fernsehindustrie hat inzwischen mehrere Verfahren entwickelt, die dem Fernsehteilnehmer zur Wiedergabe auf seinem Empfangsschirm (4:3) ein unverzerrtes Breitwandbild aufbereiten.
1.: Das Filmbild wird bei diesen Verfahren in der herkömmlichen Technik abgetastet. Um nun das Bild dem Format anzupassen, muß es in der Vertikalen komprimiert werden. Das heißt, daß man das Bild auf weniger Zeilen entsprechend dem erforderlichen Kompressionsfaktor zusammendrängt. Das kann zum Beispiel elektronisch durch Rasterkonversion vorgenommen werden oder auch durch Vergrößerung des Zeilenabstandes beim Abtasten. Die Zeilen, die dabei oben und/oder unten über das Bildformat hinausgehen sind dann bei der Wiedergabe automatisch dunkel, da sie keine Information beinhalten. So hat das komprimierte Breitwandbild, das von der neuen 16:9 Fernsehnorm für 4:3 Geräte formatgerecht ausgestrahlt werden soll nur 431 aktive Zeilen , ergänzt durch 144 dunkle Zeilen, so daß das Gesamtbild wiederum aus 575 Zeilen besteht. Es wird an dieser Stelle auf die Literaturstelle (1) hingewiesen, die sich ausführlich mit den hier nur relativ kurz zu beschreibenden Verfahren befaßt. In der erwähnten Arbeit werden insbesondere auch die Nachteile dieser Verfahren beschrieben. Der Fachmann erkennt schnell, daß durch die infolge der Reduzierung der Zeilenzahl durch kaum vermeidbare Unterabtastung Bildfehler entstehen. Es wird in (1) auch eine deutlich verbesserte Technik erläuter, auf die auch unter Pkt.2 (s.d.) kurz eingegangen wird.
   Ehe auf das zweite Verfahrensgruppe eingegangen wird, soll zuvor noch auf die Breitwandentwicklung der Fernsehanstalten selbst eingegangen werden. - Seit längerer Zeit ist die gesamte Fernsehtechnik bemüht, eine eigene Breitwandtechnik zu entwickeln. Da hiervon die gesamte künftige Technik des Fernsehens betroffen ist, war es entsprechend schwierig, einen neuen Standard festzulegen. Und da die Empfänger einen in seiner Größe unveränderbaren Bildschirm besitzen, deren Größe festgelegt werden mußte, kam anders als bei den leicht veränderbaren Abmessungen der Projektionswände nur ein einziges neues Format infrage. Man hat sich auf das Seitenverhältnis 16:9 ( = 1,778) geeinigt. Es wird aber trotz der Fetlegungen noch recht lange dauern bis alle Studios umgerüstet sein und bis genügend Videobänder in der neuen Norm den Fernsehanstalten zur Verfügung stehen werden.
   Nachfolgend soll auf die Verfahrensgruppe 2 eingegangen werden:
2.: Das Verfahren "PAL Plus" bietet die Möglichkeit, kompatible Schritte von Breitwandproduktionen oder life-Aufnahmen im neuen Standart 16:9 durch Herausnehmen jeweils der vierten Zeilen von 575 vor dem Aussenden auf den herkömmlichen Fernsehgeräten darzustellen. Doch anders als bei den Verfahren unter 1. und 2. werden die herausgenommenen Zeilen unsichtbar in den zweimal 72 schwarzen Zeilen über und unter dem Breitwandbild übertragen, wodurch das komplette Breitwandbild in neuen Empfängern im 16:9-Format wieder hergestellt werden kann. Diese Technik erlaubt volle Kompatibilität vom ältesten bis zum neuesten Fernsehempfänger mit einem Bildschirm im Format 16:9. In (1) ist darü berhinaus ein noch darüberhinaus verbessertes Verfahren beschrieben, bei dem die jeweils vierten Zeilen nicht herausgenommen werden, sondern der gesamte Bildinhalt wird in der Vertikalen durch einen Tiefpaß und einen Hochpaßfilter in zwei Teile zerlegt. Der Tiefpaßanteil beinhaltet das komplette Bild, das mit 431 Zeilen dargestellt wird, und es kann in der sogenannten Letterbox-Technik auf den bisherigen 4:3 Bildschirmen wiedergegeben werden, wobei Bildbeeinträchtigungen durch Unterabtastfehler nahezu ausgeschaltet werden können Das führt zu einer höheren Bildgüte führt. Bei den neuen Empfängern für die 16:9-Darstellung wird der Hochpaßanteil in den zweimal 72 Zeilen mit dem Bildinhalt der 431 Zeilen zusammengeführt, und ein hochwertigeres Bild als es mit den alten 4:3 Empfängern dargestellt werden kann, ist auf den 16:9 Schirmen zu sehen. PAL PLUS überträgt über den bisherigen Kanal praktisch gleichzeitig Bilder für das alte 4:3 und das neue Format 16:9.

Das Thema Breitwandtechnik hat im Zusammenhang mit der Fernsehtechik zwei wesentliche Richtungen: Einmal ist es die Fernsehtechnik für sich genommen, wobei kompatiblen Schritten wie PAL PLUS für die lange zu erwartende Zeit für den Übergang vom Format 4:3 auf das Breitwandformat 16:9 eine große Bedeutung zukommen kann. Zum anderen bleibt aber die Frage der über Fernsehkanäle auszustrahlenden Filme auch dann noch erhalten, wenn die gesamte TV-Industrie auf 16:9 umgeschaltet haben wird. Nachfolgend seien daher ein Teil der verschiedenen Formate der Filmtechnik zusammengestellt, unabhängig von dem genauen aktuellen Stand der verschiedenen Techniken:

**Tablelle 1:**

| | | |
|---|---|---|
| Fernsehen, bisherige Norm : | Seitenverh. : | 1.333 (4:3) |
| Film - Technirama : | Seitenverh. : | 1.5 |
| Fernsehen, künftige Norm : | Seitenverh. : | 1.78 (16:9) |
| Film - Vitavision : | Seitenverh. : | 1.85 |
| Film - CinemaScope 55 : | Seitenverh. : | 2.0 |
| Film - Todd AO : | Seitenverh. : | 2.2 |
| Film - Techniscope : | Seitenverh. : | 2.35 |
| Film - CinemaScope : | Seitenverh. : | 2.55 |

Aus diesen Zahlen läßt sich leicht erkennen, daß selbst nach dem Einführen des neuen TV-Breitwandformats das Problem der zu überragenden Filme der Filmindustrie noch nicht gelöst ist. Und die Forderung nach Übertragung solcher Filme wird vermutlich noch lange bestehen bleiben. So müssen in der Letterbox - Technik für eine formatgerechte Darstellung von CinemaScope- Filmen (Format 2.55)in der 4:3-Technik insgesamt 275 schwarze Zeilen eingefügt werden, und bei der Übertragung über die künftigen Breitwandkanäle wären immer noch 174 schwarze Zeilen erforderlich, um formatgetreue Bilder zu erreichen. Auch die Darstellung des 4:3 Formats auf Breitwand-Geräten stößt bei den Kunden vorerst noch nicht auf große Zustimmung, wie aus dem Fachhandel zu erfahren ist. Zur Überwindung der aufgezeigten Schwierigkeiten, die sich vor allem durch unterschiedliche Bildformate von Aufnahme- und Empfangsgeräten ergeben und wobei die elektronische Formatwandlung zu Qualitätseinbußen führt, kann die vorliegende Erfindung eingesetzt werden. Sie zeitigt bei ihren Anwendungen eine hohe Flexibilität und liefert zur Lösung aller im Zusammenhang mit der Anpassung der verschiedensten Formate an die Übertragungstechniken des Fernsehens und an dessen bisheriges und künftiges neues Format wesentliche Beiträge. Das Verfahren der Erfindung liefert die kompatiblen Schritte, die zur Einführung des neuen Breitwandformats 16:9 im Fernsehen notwendig und förderlich sind. Hierbei entsteht im Gegensatz zu den bisher angewandten Methoden keinerlei Bildverlust.
Bei dem Verfahren der Erfindung wird das erreicht, indem alle Zeilen eines Bildes, die bei der TV-Aufnahme oder bei der Filmabtastung anfallen auch dann in ihrer elektronischen Form über die vorhandenen Übertragungswege geleitet werden, wenn sich auf allen oder einem Teil der Empfangsgeräte wegen der Formatabweichung ein verzerrtes Bild ergeben kann, das jedoch am Empfangsort nach Empfang und Darstellung auf dem Bildschirm durch optische Einrichtungen für den Betrachter entzerrt wird.

Es sollte grunsätzlich bei der Vorbereitung von Übertragungen und bei elektrischer Speicherung das Prinziep der kompletten Speicherung aller Bildzeilen angewandt werden. Die Anamorphote bestehen insbesondere aus einer Fresnel-Zylinder-Linse, aus Kunststoff-Zylinder-Linsen, aus Wasser- oder allgemein aus Flüssigkeits-Zylinder-Linsen anstelle von Zylindernder-Linsen Hohlspiegel mit den gleichen optischen Eigenschaften eingesetzt werden können.

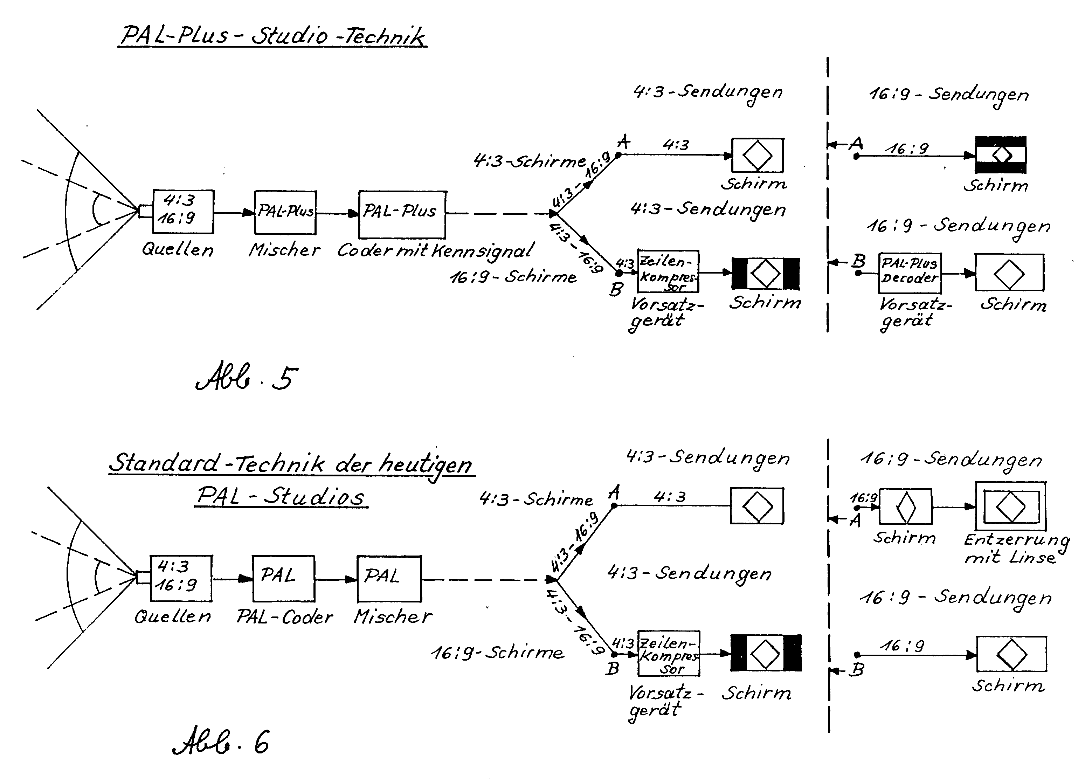

Besondere Bedeutung kommt der Erfindung in der Übergangszeit der Fernsehtechnik vom bisherigen Format 4:3 auf die Breitwandtechnik mit dem Format 16:9 zu. Es gibt, wie oben beschrieben, mehrere Verfahren der sogenannten Letterboxtechnik, die Breitwandfilme über die PAL-Kanäle verteilen. Aber nur ein Verfahren kann zur Zeit die künftigen Breitwandübertragungen 16:9 als auch die bisherigen Sendungen im 4:3 Format über jeweils einen PAL-Kanal gleichzeitig beiden Empfängergruppen zuleiten. Das ist das unter Pkt.3 beschriebene PalPlus. In Anbildung 5 (s.d.) ist dieses Verfahren dargestellt. Man kann dort leicht erkennen, wie es mit einigem Aufwand möglich ist, beide Verfahren einzusetzen. Je nach der im Programm vorgesehenen Technik wird dasselbe im Format 16:9 oder 4:3 Technik den Teilnehmern überspielt. Und wie aus der Abb.5 im einzelnen ersichtlich ,können beide Techniken von den alten und auch den neuen Geräten verarbeitet werden. - Wird z.B. 16:9 vom Studio gesendet, dann erhält der 4:3 Empfänger die Bilder im Letterbos-Format zugeleitet, und der Empfänger in der neuen Norm füllt den breiten 16:9-Schirm mit dem empfangenen Bild aus. - Kommt dagegen eine Sendung in der alten Technik zur Ausstrahlung, dann hat der 4:3 Empfänger automatisch das gewohnte, den Schirm ausfüllende Bild, und das 16:9 Gerät muß durch eine Zeilenkompression von 52 auf 39 Mikrosekunden den Bildschirm indirekt verkleinern,. Es werden dann automatisch am linken und am rechten Rand schwarze, d.h. dunkle Balken erzeugt. Zusammenfassend: Der 4:3 Empfänger bekommt bei Breitwandübertragungen, wie oben ausführlich beschrieben, oben und unten dunkle Balken vom PAL-Plus Studio "geliefert", wodurch der Bildschirm praktisch verkleinert wird. Und bei Ausstrahlung in 4:3 Technik geschieht das Umgekehrte: der 16:9 Empfänger fügt rechts und links dunkle Balken in das Bild ein und verkleinert so im Fall dieser Sendungen den Bildschirm.

Die Lösung ist durchaus interessant, aber bis zur vollen Reife sind noch einige Probleme zu lösen. Doch ist diese neue Technik auch von der wirtschaftlichen Seite nicht leicht zu lösen. So müssen an die Stelle der altbewährten PAL-Studios Komponentenstudios treten, was nicht unerhebliche Investitionen erfordert. Und die Studios müssen gleichzeitig PALPlus Coder mit Kennsignal einsetzen, das vom 16:9 Empfänger ausgewertet werden muß. Au5f der Empängerseite entstehen ebenfalls erhebliche Kosten durch den PAL Plus-Decoder.

Dieses Bild sieht beim Einsatz der Technik der Erfindung völlig anders aus. Wie aus der Abb.6 ersichtlich, braucht auf der Studioseite an der Standard-Technik des heutigen PAL-Studios nichts verändert zu werden. Bei der Abtastung von Filmen auch von Breitwandfilmen wird das gesamte Bild abgetastet. Es ist dabei keine Bildkompression durch Zylinderlinsen in der Vertilalen zum Entzerren erforderlich.- Für die Aufnahmetechnik gilt das gleiche. Wenn eine Breitwanddarstellung ansteht, dann wird beim Objektiv lediglich die entsprechende Breitwandeinstellung durch Einfügen eines Anamorphoten vorgenommen, da die Zeilenabtastzeit unverändert 52 Mikrosekunden beträgt. Die einzige Veränderung ist beim Teilnehmer der bisherigen 4:3 Technik vorzunehmen: Dieser muß, wie oben beeits erläutert, bei Empfang von Breitwandfilmen die sofort erkennbare Verzerrung dadurch ausgleichen, indem er die zum Bildentzerren in der Wagerechten vorgesehene Zylinderlinse vor den Bildschirm bringt.. Für den Teilnehmer ergibt sich ein besonders großer Vorteil dadurch, daß er ein echtes Breitwandbild geboten bekommt. Ihm wird das komplette Bild zugeleitet und und nicht ein solches, bei dem die jeweils vierten oder sogar die dritten Zeilen entfernt worden sind, um das verkleinerte Breitwandformat zu erhalten, was ja ohnehin äußerst unlogisch ist. Durch die optische Entzerrung des Breitwandbildes, eine Bildvergrößerung in der Wagerechten, haben die Fernsehzuschauer eine um im Mittel den Faktor zwei größere Bildfläche gegenüber der Letterbox-Technik. Mancher wird mit überschaubarem Aufwand Freude an der Breitwandtechnik bekommen. Mit diesem kompatiblen Schritten rückt auch die z.Z. noch ferne HDTV-Technik näher an die "Mediengesellschaft" heran. Diese ist offensichtich nicht bereit die von der Industrie herbeigewünschte schnelle Wandlung ohne kompatible Zwischenschritte mitzumachen.

Durch den Einsatz des Verfahrens gemäß der Erfindung können Fernseh-Studios bei der Einführung neuer Normen für Bildformate unverändert bleiben. Sie können auch dann mit der kompletten Anzahl vollständiger Bildzeilen die Bilder über terristische Übertragungswege, über Satellitenwege und über Kabelfernsehkanäle zu den Empfängern leiten, wenn alle Empfänger oder ein Teil derselben auf den Bildschirmen durch die Formatänderung ein verzerrtes Bild empfangen. Diese können dann mit ihrem gesamten Informationsgehalt durch Dazwischensetzen von Anamorphoten entzerrt werden,um sie in ihrem ursprünglichen Format wieder herzustellen. Das Vefahren kann vor allem beim Übergang von einem Grundformat wie z.,B. 4:3 auf ein neues, wie z.B. 16:9 mit großem Vorteil eingesetzt werden. Dadurch wird die von vielen Seiten als zu hoch angesehene Schwelle zum HDTV leichter überwindbar. Das Vefrfahren erlaubt es auch, daß digitale Aufzeichnungen gemacht werden können, die die Lehren dieses Verfahrens berücksichtigen, wodurch der bei Wandlungen nicht vermeidbare Informationsverlust nicht auftreten kann. Das Verfahren dieser Anmeldung erlaubt es auch, daß die bei der Betrachtung der Bildschirme notwendige Entzerrung durch für den Betrachter geschaffenen Betrachtungsgeräte, wie z.B. Operngläser mit Anamorphoten u. dgl., vorgenommen wird.
In der praktischen Anwendung des beschriebenen Verfahrens kann es durchaus vorkommen, daß es wünschenswert ist, daß die notwendige Bildentzerrung nur zu einer geringern Bildvergrößerung des virtuellen Bildes führt. So ist es ohne weiteres möglich, kombiniert mit der Vergrößerung des virtuellen Bildes in der Wagerechten die senkrechte Bildausdehnung etwas mittels einer Zerstreuungslinse zu komprimieren. Das kann durch entsprechend berechnete Linsen erreicht werden. Hierzu können auch Hohlspiegel das Linsensystem ergänzen.

Diese Bescreibung wird durch rfecht ausführlich gehaltene Abbildungen ergänzt:
- Abb.1: : Sie zeigt die Bildver- und Entzerrung bei CINEMA SCOPE
- Abb.2: : Hier wird das neue Verfahren mit PAL Plus verglichen

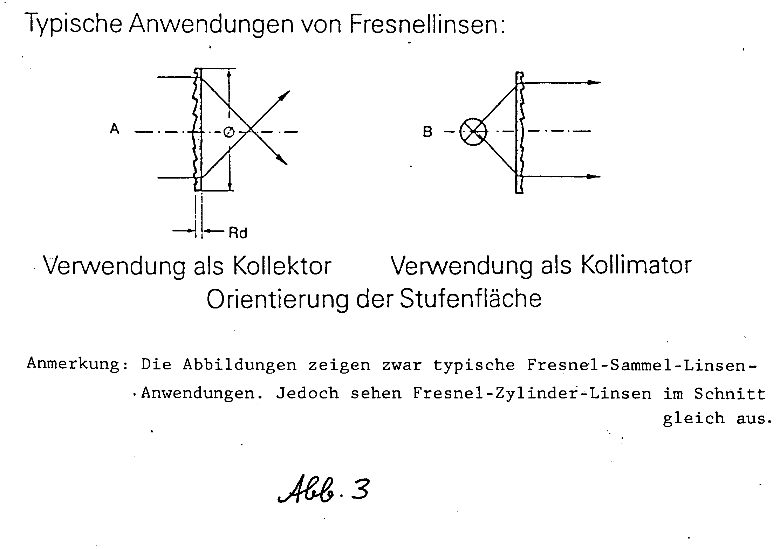

- Abb.3: : Dieses Bild läßt das Prinziep der Fresnellinsen erkennen.

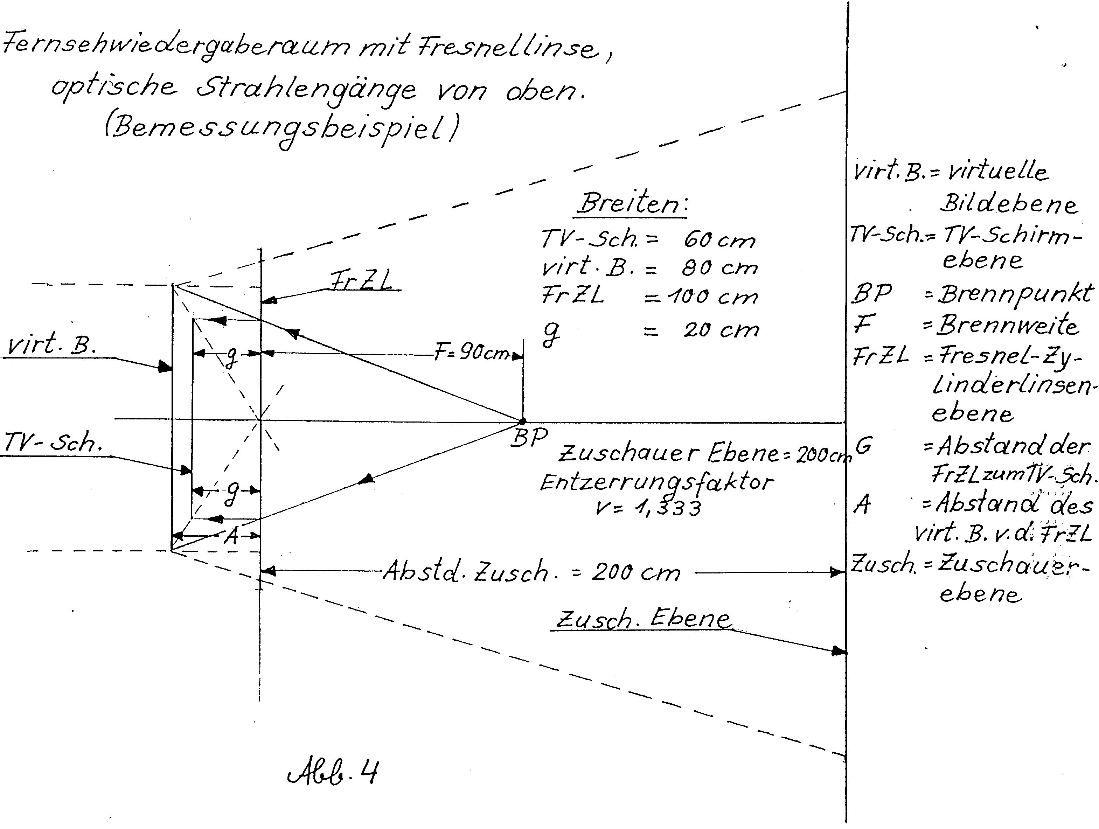

- Abb.4: : Hier werden die bereits mit Erfolg angewandten Bemessungskriterien das für die Linsen erläutert.
- Abb.5: : Sie läßt den Fachmann erkennen, welchen Aufwand die PAL Plus-Studios erfordern
- Abb.6: : dem gegenüber können bei dem bechriebenen Verfahren die standardisierten, bewährten PAL Studios erhaltenbleiben.

Literaturstellen:
(1) H.Schönfelder - Chr.Hentschel
   Probleme des Formatwechsels bei zukünftigen verbesserten PAL-Verfhr.
   FKTG 7/1991
(2) H.Naumann
   Optik für Konstrukteure - Knapp-Verlag 1970

## Patentansprüche

1. Verfahren für Fernsehübertragungen und Aufzeichnungen zur kompletten Wiedergabe aller Bildformate beim Betrachter, so auch derjenigen, die dem üblichen Format der Fernsehtechnik oder anderer Anwendungen nicht entsprechen, dadurch gekennzeichnet, daß alle Zeilen der Aufnahme vollständig oder auch bei der Abtastung von Filmen für die direkte Übertragung oder die Aufzeichnung erhalten bleiben, wenn sich bei allen oder einem Teil der Empfangsgeräte, infolge Formatabweichung ein verzerrtes Bild ergeben kann, das jedoch am Ort der direkten oder späteren Betrachtung durch Anamorphote so entzerrt wird, das das ursprüngliche komplette Format wieder entsteht.

2. Verfahren nach Anspruch 1., dadurch gekennzeichnet, daß auch bei der Vorbereitung von Übertragungen und bei elektrischer Speicherung das Prinziep der kompletten Speicherung aller Bildzeilen angewandt wird.

3. Verfahren nach Anspruch l.und 2.,dadurch gekennzeichnet, daß die Anamorphote insbesondere aus einer Fresnel-Zylinder-Linse,aus Kunststoff-Zylinder-Linsen, aus Wasser- oder allgemein aus Flüssigkeits-Zylinder-Linsen bestehen .

4. Verfahren nach Anspruch 1. bis 3.,dadurch gekennzeichnet, daß anstelle von Zylindernder-Linsen Hohlspiegel mit den gleichen optischen Eigenschaften eingesetzt werden können.

5. Verfahren nach Anspruch 1. bis 4., dadurch gekennzeichnet, daß durch den Einsatz des Verfahrens gemäß der Erfindung Fernseh-Studios bei der Einführung neuer Normen für Bildformate unverändert bleiben können und diese auch dann mit der kompletten Anzahl vollständiger Bildzeilen die Bilder über terristische Übertragungswege, über Satellitenwege und über Kabelfernsehkanäle zu den Empfängern leiten, wenn alle Empfänger oder ein Teil derselben auf den Bildschirmen durch die Formatänderung ein verzerrtes Bild empfangen, um diese dann mit ihrem gesamten Informationsgehalt durch Dazwischensetzen von Anamorphoten zu entzerren, um sie in ihrem ursprünglichen Format wieder herzustellen.

6. Verfahren nach Anspruch 1. bis 5., dadurch gekennzeichnet, daß das Verfahren insbesondere beim Ubergang von einem Grundformat wie z.,B. 4:3 auf ein neues, wie z.B. 16:9 eingesetzt wird.

7. Verfahren nach Anspruch 1. bis 6., dadurch gekennzeichnet, daß auch digitale Übertragungen und Aufzeichnungen gemacht werden können, die später bei der Wiedergabe oder Weiterverwendung zum gleichen Ergebnis führen.

8. Verfahren nach Anspruch 1.bis 7., dadurch gekennzeichnet, daß die bei der Betrachtung der Bildschirme notwendige Entzerrung durch für den Betrachter geschaffenen Betrachtungsgeräte, wie z.B. Operngläser mit Anamorphoten u. dgl., vorgenommen wird.

9. Verfahren nach Anspruch 1.bis 8., dadurch gekennzeichnet, daß auch die notwendige Entzerrung durch eine Kombination gekreuzter Zylinderlinsen, Hohlspiegel oder anderen Anamorphoten in zwei Bildebenen vorgenommen werden kann, um so z.B. zu einer gewünschten Größe des virtuellen Bildes zu gelangen, wobei die eine Linse eine Sammellinse und die andere eine Zerstreuungslinse sein kann.
